# EUROPÄISCHE PATENTANMELDUNG

(11) **EP 2 998 009 A1**
(43) Veröffentlichungstag der Anmeldung: **23.03.2016**
(21) Anmeldenummer: 15184716.7
(22) Anmeldetag: 10.09.2015
(51) Int. Cl.: B01D 33/073, C02F 9/00, C02F 1/00, C02F 1/32, C02F 103/42, C02F 103/00, B01D 24/32, B01D 24/34, B01D 36/02

(54) **FILTERANLAGE**

(30) Priorität: 22.09.2014 DE 102014013740; 22.09.2014 DE 202014007700 U
(71) Anmelder: Brüggert, Hannelore, 46487 Wesel (DE)
(72) Erfinder: Brüggert, Detlef, 46487 Wesel (DE)
(74) Vertreter: Demski, Siegfried

(57) **Zusammenfassung**

Die Erfindung betrifft eine Filteranlage 1 zur Reinigung von Wasser aus einem Teich, insbesondere Gartenteich oder Schwimmteich, umfassend zumindest ein Gehäuse 2 mit wenigstens einem Zu- und Ablaufanschluss und zumindest einer Filtereinheit. Das Gehäuse 2 weist wenigstens einen Hohlraum 10 auf, in dem ein flüssigkeitsdurchlässiger Rotationskörper 21 mit Filtermaterial 25 gelagert ist, wobei der Hohlraum 10 zumindest eine Einlauf- und eine Auslauföffnung aufweist. Das in dem Rotationskörper 21 gelagerte Filtermaterial 25 besteht aus einem porösen Schaumstoff zur Bildung einer Bakterienkultur und kann durch einen Spülvorgang gereinigt werden. Der Rotationskörper 21 wird bei Einleitung eines Spülbetriebes durch Umschalten zweier Sperrschieber 5, 6 innerhalb des Hohlraumes 10 verlagert und kann sich im mittleren Bereich des Hohlraumes 10 frei drehen. Hierdurch tritt eine Verwirbelung der Filtermaterialien innerhalb des Rotationskörpers 21 ein, wodurch eine verbesserte Reinigung der Filtermaterialien 25 erfolgen kann.

## Beschreibung

Die Erfindung betrifft eine Filteranlage zur Reinigung von Wasser aus einem Teich, insbesondere Gartenteich oder Schwimmteich, umfassend zumindest ein Gehäuse mit wenigstens einem Zu- und Ablaufanschluss und zumindest einer Filtereinheit.

Jedes stehende Gewässer, welches über keinen ausreichenden Frischwasserzulauf verfügt, benötigt eine Filteranlage, um das Wasser zu reinigen. Beispielsweise müssen die im Wasser befindlichen Schwebstoffe und Verunreinigungen, welche zum Beispiel durch einen Fischbesatz entstehen, herausgefiltert und in einer biochemischen Nitrifikation und Denitrifikation sowie einer Phosphorelimination beseitigt werden. In großen Kläranlagen erfolgt dies meistenteils in einzelnen Becken in verschiedenen Stufen. Dies ist bei Gartenteichen großen- und kostenmäßig nicht realisierbar. Aus diesem Grunde werden Filtereinheiten angeboten, welche in der Regel über einen Zulauf- und Ablaufanschluss verfügen, um einerseits das verschmutzte Wasser dem Filter zuzuführen und das aufbereitete Wasser dem Teich wieder zurückzuführen. Durch die Filteranlagen erfolgt in diesem Fall nur eine Nitrifikation. Die Filteranlagen bestehen hierbei aus einem Gehäuse, an dem die Zulauf- und Ablaufanschlüsse einstückig angeformt sind oder mit diesen verbunden wurden. Über ein Kammersystem in dem Gehäuse wird das Wasser einem Filtermaterial zugeleitet, welches beispielsweise aus porösen Schaumstoffmatten oder runden bzw. ovalen Kunststoffkörpern besteht. Hierbei ist es wichtig, eine möglichst große Oberfläche auszubilden, die in der Regel bei porösen Schaumstoffmatten wesentlich ausgeprägter ist als bei einzelnen Kunststoffelementen. Es besteht aber auch die Möglichkeit, zwei getrennte Kammern vorzusehen, von denen eine mit Kunststoffkörpern gefüllt ist und in einer weiteren Kammer weitere Schaumstoffmatten einliegen. Sowohl an den Kunststoffkörpern als auch an den Schaumstoffmatten bilden sich innerhalb kürzester Zeit Ansammlungen von Mikroben und Bakterien, die die vorhandenen, herauszufilternden Stoffe aus dem Wasser abbauen. Die hierbei entstehenden Rückstände bilden eine Schlammschicht, die insbesondere an dem Schaumstoffmaterial anhaftet und regelmäßig entfernt werden muss.

Zum Entfernen der Schlammschicht und Reinigung der Filtermatten ist es beispielsweise bekannt, die Schaumstoffmatten durch einen nach außen ragenden Hebel, an dem innerhalb des Gehäuses eine Gittermatte befestigt ist, auszuquetschen, sodass die vorhandenen eingelagerten Schmutzpartikel herausgedrückt und ausgewaschen werden können. Dieser Vorgang muss während des normalen Betriebes mehrfach erfolgen, um eine entsprechende Reinigungswirkung zu erzielen. Vorzugsweise sollte hierbei eine Umschaltung des Zu- und Ablaufwassers erfolgen, damit die herausgelösten Schmutzpartikel nicht wieder in den Teich gelangen. Aus diesem Grunde verfügen viele Filter über einen zusätzlichen Schmutzwasserausgang, wobei in diesem Fall durch Umlegung eines Hebels der Wasserablauf zum Becken hin unterbrochen und zum Schmutzwasserablauf umgeleitet wird.

Als nachteilig ist anzusehen, dass die Reinigungswirkung mithilfe der Hebelkraft und eines Gitters nur sehr gering ist. Aufgrund dieser mangelnden Reinigungsleistung durch das Auspressen der Schaumstoffmatten ist es daher zusätzlich erforderlich, in größeren Zeitabständen die gesamte Filteranlage zu reinigen, mit einer Entnahme der Schaumstoffmatten und intensiver Reinigung sowie einer vollständigen Reinigung des Gehäuses. Die hierzu erforderlichen Zeitabstände verringern sich bei entsprechend großen Teichen, die über einen reichlichen Fischbesatz verfügen. Durch die wiederkehrenden Grundreinigungen wird in der Regel ein Großteil der Mikroben und Bakterien entfernt, sodass einige Zeit benötigt wird, bis erneut eine ausreichende Ansammlung vorhanden ist.

Aufgabe der vorliegenden Erfindung ist es, eine neuartige Filteranlage aufzuzeigen, die mit geringem Aufwand eine sehr zuverlässige Reinigung des Filtermaterials und eine möglichst große Oberfläche des eingesetzten Filtermaterials ermöglicht.

Die Aufgabe wird erfindungsgemäß dadurch gelöst, dass das Gehäuse wenigstens einen Hohlraum aufweist, in dem ein flüssigkeitsdurchlässiger Rotationskörper mit Filtermaterial gelagert ist, wobei der Hohlraum zumindest eine Einlauf- und eine Auslauföffnung aufweist. Weitere vorteilhafte Ausgestaltungen der Erfindung ergeben sich aus den Unteransprüchen.

Durch die Verwendung eines flüssigkeitsdurchlässigen Rotationskörpers mit Filtermaterial, welches in einem Hohlraum des Gehäuses aufgenommen ist, werden viele Vorteile erzielt. Die Oberfläche des Rotationskörpers kann entsprechend groß ausgebildet sein und ermöglicht auf diese Weise einen hohen Durchfluss des Wassers mit einer vollständigen Benetzung des Filtermaterials. Sowohl die Einlauf- als auch die Auslauföffnung kann ebenfalls entsprechend groß dimensioniert werden, wobei durch die Formgebung des Rotationskörpers eine große Anströmfläche zur Verfügung steht. Im normalen Filterbetrieb ist hierbei vorgesehen, dass der Rotationskörper aufgrund des einlaufenden Wassers und seiner Schwimmfähigkeit nach oben gedrückt wird und von unten ausgehend durchströmt wird, wobei oberhalb des Rotationskörpers die Auslauföffnung angeordnet ist und damit sowohl die Einlauf- als auch die Auslauföffnung einen vergleichbar großen Querschnitt aufweisen. Ein besonderer Vorteil entsteht hierbei dann, wenn eine Spülung des Rotationskörpers mit Filtermaterial erfolgt. In diesem Fall wird das Wasser aus dem Teich und ggf. Frischwasser in umgekehrter Reihenfolge durch den Hohlraum und Rotationskörper gepumpt. Aufgrund des großen Querschnitts der Einlauföffnung, welche in diesem Fall bei der Spülung als Auslauföffnung dient, kann das Wasser schnell aus dem Hohlraum austreten. Zusätzlich wird der Rotationskörper durch den vorhandenen Wasserdruck, der beim Spülvorgang durch die Auslauföffnung entsteht, nach unten gedrückt und kann im mittleren Bereich eine freie Rotation aufgrund des einströmenden Wassers ausführen. Durch diese Rotation werden die Filtermaterialien, welche lose in dem Rotationskörper gelagert sind, durcheinandergewirbelt, wodurch die einzelnen Filtermaterialien durchmischt und ausgewaschen werden. Hierdurch wird ein hoher Reinigungsgrad der Filtermaterialien erreicht, ohne dass diese verformt werden müssen. Die Filtermaterialien werden aufgelockert und können gespült werden. Das austretende Wasser, welches mit Schmutzpartikeln angereichert ist, kann hierbei über einen Schmutzwasserablauf abgeleitet werden. Um eine optimale Durchströmung des Hohlraumes und damit des Rotationskörpers in beiden Richtungen zu erreichen, ist im unteren Bereich die Einlauföffnung und im oberen Bereich des Hohlraumes die Auslauföffnung großflächig ausgebildet, wodurch ein großer Strömungsquerschnitt erzielt wird.

Um eine Bewegung des Rotationskörpers innerhalb des Hohlraumes zu ermöglichen, ist der Hohlraum in horizontaler Richtung an die Abmessung des Rotationskörpers derart angepasst, dass dieser ohne Verklemmen in dem Hohlraum einliegen kann, wobei in vertikaler Richtung der Hohlraum größer als der Rotationskörper ausgebildet ist, sodass der Rotationskörper durch den Wasserdruck innerhalb des Hohlraumes angehoben werden kann. In spezieller Ausgestaltung des Hohlraumes ist vorgesehen, dass zwei abgerundete Endbereiche vorhanden sind, welche geringfügig größer als der Durchmesser des Rotationskörpers ausgebildet sind und einen mittleren gestreckten Bereich aufweisen, welcher ebenfalls geringfügig größer ausgebildet ist. Der Rotationskörper kann sich somit an die Endbereiche anlegen und wird gleichzeitig in der jeweiligen Lage aufgrund des Wasserdruckes fixiert. Im mittleren Bereich hingegen kann der Rotationskörper frei rotieren. Dieser Fall tritt regelmäßig ein, wenn auf Spülbetrieb der Filteranlage umgeschaltet wird, bei der eine Änderung der Flussrichtung des Wassers eintritt und damit der Rotationskörper nach unten gedrückt wird. Somit kann der Rotationskörper im mittleren gestreckten Bereich um eine beliebige Achse rotieren, weil der Rotationskörper im mittleren gestreckten Bereich frei drehbar ist. Im normalen Filterbetrieb wird das über eine Pumpe zugeführte Wasser aus dem Teich von der Einlauföffnung zur Auslauföffnung gedrückt und im Spülbetrieb in entsprechend umgekehrter Richtung, wobei die Strömungsrichtung durch zwei Sperrschieber einstellbar ist.

Um einen möglichst geringen Aufwand bei der Herstellung des Gehäuses zu realisieren, wird der Hohlraum durch eine innere, einstückig angeformte Schale des Gehäuses gebildet, die fest mit der äußeren Schale des Gehäuses verbunden ist. Um die Einlauf- und Auslauföffnung innerhalb des Gehäuses zu realisieren, weist die innere Schale jeweils an dem oberen und unteren Bereich einen Durchbruch auf, welcher jeweils durch ein Sieb abgedeckt ist. Mithilfe des Siebes können hierbei größere Verschmutzungen zurückgehalten werden. Um einen möglichst großen Durchfluss zu erreichen, erstrecken sich die Durchbrüche und damit auch die Siebe jeweils über einen Winkelbereich von 80 bis 100 Grad bei einer Kugelform. Der Rotationskörper kann hierbei sowohl aus einer Kugel als auch aus einem Zylinder bestehen, welche jeweils in Vertikalrichtung innerhalb des Hohlraumes verlagerbar sind. Soweit ein Zylinder zum Einsatz kommt, kann die untere und obere Zylinderfläche zur Gestaltung der Größe des Durchbruches und des Siebes herangezogen werden.

Um eine gute und gleichmäßige Durchströmung des Rotationskörpers zu gewährleisten, ist dieser nahezu vollständig mit einer perforierten Außenfläche versehen. Somit kann das Wasser über die Einlauföffnung und das Sieb großflächig in den Rotationskörper einströmen und auf gleichem Wege aus dem Rotationskörper und die Auslauföffnung austreten. Hierdurch wird insbesondere sichergestellt, dass das gesamte Filtermaterial durchströmt wird.

Zum Befüllen des Rotationskörpers, in der Regel nur bei erstmaligem Einsatz, ist eine verschließbare Öffnung vorgesehen, sodass das Filtermaterial lose innerhalb des Rotationskörpers eingelegt werden kann. Die verschließbare Öffnung zum Befüllen des Rotationskörpers mit Filtermaterial ist hierbei so gestaltet, dass diese mit der Außenfläche bündig abschließt, beispielsweise in einer Vertiefung einliegt. Nachdem die erstmalige Befüllung mit Filtermaterial erfolgt ist, braucht diese Öffnung nicht wieder benutzt zu werden, es sei denn, dass die Filteranlage vollständig zerlegt werden soll, wobei dann die Möglichkeit besteht, soweit das Gehäuse aus zwei Gehäusehälften besteht und eine horizontale Unterteilung aufweist, das Gehäuse aufzuschrauben und den Rotationskörper zu entnehmen. Durch das Volumen beispielsweise einer Kugel besteht die Möglichkeit, sehr viel Filtermaterial innerhalb des Rotationskörpers zu platzieren, wobei die Menge des Filtermaterials und damit die Filtermaterialoberfläche mit dem Radius der Kugel überproportional ansteigt. Die Wahl der richtigen Größe richtet sich hierbei nach der Größe des zu reinigenden Teiches, wobei eine Größe von 10 bis 120 cm, vorzugsweise 50 bis 70 cm für eine Kugel bevorzugt wird. In einer ähnlichen Größenordnung könnte auch ein Zylinder eingesetzt werden, welcher allerdings bei der Rotation nur einen Freiheitsgrad besitzt, während demgegenüber die Kugel beliebige Drehungen ausführen kann.

Damit eine optimale Verwirbelung der Filtermaterialien innerhalb des Rotationskörpers möglich ist, wird vorzugsweise ein Schaumstoff in Form von Scheiben, Vierecken oder Würfeln verwendet und der Rotationskörper hiermit lose befüllt, um die Beweglichkeit der einzelnen Schaumstoffteilchen zu gewährleisten. Eine Befüllung erfolgt maximal bis 90 %. Zusätzlich kann der Rotationskörper mit schwimmfähigen Materialien, wie beispielsweise PE-Kunststoffelementen, zumindest teilweise befüllt werden, um ein leichteres Aufschwimmen des Rotationskörpers im Wasserstrom zu ermöglichen. Der Rotationskörper selbst wird ebenfalls aus einem schwimmfähigen Material, wie beispielsweise PE hergestellt und schwimmt damit auf, wobei die zusätzlichen PE-Kunststoffelemente nur im Bedarfsfall eingesetzt werden müssen. Durch die Verwendung des PE-Materials wird beim Einströmen von Wasser aus dem Teich der gesamte Rotationskörper vertikal innerhalb des vorhandenen Hohlraumes angehoben und kommt somit mit seiner Außenfläche unmittelbar an der Wandung des Hohlraumes zu liegen. Der verbliebene Abstand zwischen Rotationskörper und oberem Sieb definiert hierbei den Freiraum der Auslauföffnung. Ebenso definiert der Abstand zwischen dem unteren Sieb und dem Rotationskörper den Freiraum der Einlauföffnung. Im Filterbetrieb ist der Freiraum der Auslauföffnung geringer als der Freiraum der Einlauföffnung, während im Spülbetrieb aufgrund des nach unten gedrückten Rotationskörpers sich die Verhältnisse umkehren. Hierdurch wird beispielsweise sichergestellt, dass das eintretende Wasser durch das Sieb hindurch verwirbelt in die Öffnung des Rotationskörpers eintreten kann. In der oberen und unteren Position wird der Rotationskörper jeweils fest gegen Wandung des Hohlraumes gedrückt, sodass keine Rotation erfolgt. Soweit auf einen Spülbetrieb mit umgekehrter Flussrichtung umgeschaltet wird, und zwar mithilfe der Sperrschieber, kann der Rotationskörper in der mittleren Position kurzzeitig rotieren und somit werden die Filtermaterialien innerhalb des Rotationskörpers zur Reinigen verwirbelt und können somit leichter ausgespült werden.

In weiterer Ausgestaltung der Erfindung ist vorgesehen, dass die Filteranlage zwischen Filterbetrieb und Spülbetrieb umgeschaltet werden kann. Hierzu sind zwei Sperrschieber der Filteranlage vorgesehen, wobei in einer ersten Betriebstellung im Filterbetrieb das Wasser über den Zulaufanschluss und einen ersten Sperrschieber zu einer UVC-Lampe geführt wird und von dieser in den Hohlraum von unten einströmt. Über die Einlauföffnung tritt das Wasser in den perforierten Rotationskörper ein und durchdringt die vorhandenen Filtermaterialien. Über die Perforation kann das Wasser im Weiteren nach oben in die Auslauföffnung austreten und wird über in dem Gehäuse ausgebildete Verbindungskanäle über einen Ablaufanschluss zum Teich zurückgeführt. In der Betriebstellung Filterbetrieb sind hierbei beide Sperrschieber so geschaltet, dass der vorgeschriebene Wasserkreislauf eingehalten wird.

In einer zweiten Betriebstellung, und zwar in einem Spülbetrieb, werden beide Sperrschieber betätigt, sodass das Wasser unmittelbar aus dem Teich in den oberen Ablaufanschluss gepumpt wird. Aufgrund des vorherrschenden Druckes wird das Wasser durch den Hohlraum und den Rotationskörper aus dem Zulaufanschluss gedrückt und über die UVC-Lampe und den ersten Sperrschieber kann das Wasser über einen Schmutzwasserausgang abgeleitet werden. Hierzu ist es erforderlich, dass der erste Sperrschieber umgeschaltet ist, welcher in der normalen Betriebstellung den Wasserzulauf zum Hohlraum ermöglicht. Durch das in entgegengesetzter Richtung fließende Wasser wird beim Spülvorgang der Rotationskörper nach unten in den Hohlraum gedrückt und kann somit zusätzlich zu einer Rotation veranlasst werden. Gleichzeitig werden die innerhalb des Rotationskörpers befindlichen Filtermaterialien durcheinandergewirbelt und mit dem Wasser ausgespült. Durch die Verwirbelung der Filtermaterialien wird hierbei ein Lösen der Schmutzpartikel erleichtert und gleichzeitig sichergestellt, dass sämtliche Filtermaterialien in gleicher Weise zuverlässig ausgespült werden können. Ein Zusammenpressen der Filtermaterialien ist in diesem Fall nicht notwendig. Durch eine Kontrolle des Schmutzwasserausgangs, an dem beispielsweise ein transparenter Schlauch oder ein transparentes Rohrstück angeschlossen werden kann, wird durch die zurückgehende Eintrübung des Wassers sichtbar, wann eine ausreichende Spülung erfolgt ist.

Soweit die Pumpleistung des Wassers aus dem Teich für die Spülung nicht ausreichend sein sollte, steht zusätzlich die Möglichkeit einer Spülung mithilfe eines Frischwasserzulaufs zur Verfügung. Das Frischwasser wird über ein Sperrventil unmittelbar in den Hohlraum von oben eingeleitet und ermöglicht aufgrund des vorliegenden Wasserdruckes für eine kräftige Verwirbelung der Filterelemente mit einem gleichzeitigen Herauslösen der Schmutzpartikel, sodass diese Art der Spülung besonders effektiv ist. Das eingeleitete Frischwasser kann wie im Falle der Normalspülung über die ansonsten verwendete Auslassöffnung einströmen und durch das Sieb und die perforierte Oberfläche des Rotationskörpers in diesen eindringen, um anschließend behaftet mit den Schmutzpartikeln durch die Einlassöffnung des Filterbetriebes und die UVC-Lampe sowie dem ersten Sperrschieber zu einem Schmutzwasserablauf geleitet werden. Auch in diesem Fall besteht die Möglichkeit einer Kontrolle durch den Anschluss eines transparenten Schlauches oder eines transparenten Rohrstückes.

Um die Fertigung der Filteranlage zu vereinfachen und auch eine mögliche Reinigung der Einzelkomponenten zu ermöglichen, ist in vorteilhafter Ausgestaltung der Erfindung vorgesehen, dass das Gehäuse aus zwei Gehäuseteilen besteht, wobei das Gehäuse eine horizontale Unterteilung aufweist. Somit kann nach einem Lösen der vorhandenen Verschraubung das obere Gehäuseteil abgehoben werden und es besteht gleichzeitig die Möglichkeit, den Rotationskörper aus dem Gehäuse zu entfernen.

In weiterer Ausgestaltung der Erfindung ist vorgesehen, dass sowohl das Gehäuse als auch die Anschlussleitungen sowie die Sperrschieber durch eine aus einem Stein nachempfundene Haube abgedeckt werden. Die Größe der Haube richtet sich selbstverständlich nach der Größe der Filteranlage und erhält die Form eines Findlings, sodass die Filteranlage unmittelbar neben dem Teich platziert werden kann. Durch die Verwendung ausgewählter Materialien kann die Oberfläche dieser Haube an die natürliche Oberfläche eines Gesteins angepasst werden, sodass für einen Betrachter der Unterschied nicht auffällt.

Der wesentliche Vorteil der vorliegenden Erfindung besteht darin, dass mithilfe der neuartigen Filteranlage ein maximierter Durchflussstrom durch die Filteranlage gewährleistet wird, wobei aufgrund der gewählten Form des Rotationskörpers sehr viele Filtermaterialien lose in dem Rotationskörper eingelagert werden können, die über eine entsprechend große Oberfläche verfügen, sodass die Entstehung von notwendigen Bakterien begünstigt wird, um die vorhandenen Schadstoffe und Rückstände aus dem Fischbesatz abzubauen. Die hierdurch entstehenden Schmutzanlagerungen innerhalb der Filtermaterialien braucht nicht wie bei herkömmlichen Filtern herausgepresst zu werden, sondern durch einen einleitbaren Spülvorgang wird entweder Wasser aus dem Teich oder Frischwasser zugeführt, welches durch die Drehung des Rotationskörpers im mittleren Bereich des Hohlraumes zu einer kräftigen Verwirbelung der einzelnen Filterelemente führt und damit ein Herauswaschen der Schmutzpartikel erleichtert. Durch eine zusätzliche optische Kontrolle des austretenden Schmutzwassers kann hierbei sofort festgestellt werden, wann die Spülung beendet werden kann, um im Anschluss den Filterbetrieb des Wassers aus dem Teich fortzusetzen.

Die Erfindung wird im Weiteren anhand von Zeichnungen nochmals erläutert.

Es zeigt
- Fig. 1: in einer teilweise geschnittenen Seitenansicht die erfindungsgemäße Filteranlage mit den beiden noch nicht verbundenen Gehäuseteilen und einem Rotationskörper in Form einer Filterkugel vor der Montage,
- Fig. 2: in einer teilweise geschnittenen Seitenansicht die Filteranlage gemäß Figur 1 nach der Montage während des Filterbetriebs mit einer angehobenen Filterkugel,
- Fig. 3: in einer teilweise geschnittenen Seitenansicht die Filteranlage gemäß Figur 1 während der Einleitung des Spülbetriebes mit einer mittig gelagerten Filterkugel,
- Fig. 4: in einer teilweise geschnittenen Seitenansicht die Filteranlage gemäß Figur 1 während des Spülvorgangs mit einer abgesenkten Filterkugel,
- Fig. 5: in einer teilweise geschnittenen Seitenansicht die Filteranlage gemäß Figur 1 während des Spülvorgangs mit einer zusätzlichen Zufuhr von Frischwasser,
- Fig. 6: in einer Seitenansicht und einer geschnittenen Ansicht die Filterkugel mit Filtermaterialien,
- Fig. 7: in einer Draufsicht das untere Gehäuseteil mit Sieb,
- Fig. 8: in einer unteren Ansicht das obere Gehäuseteil mit Sieb,
- Fig. 9: in einer Draufsicht die Filteranlage mit Anschlusselementen und Sperrschieber während des Filterbetriebes und
- Fig. 10: in einer Draufsicht die Filteranlage mit Anschlusselementen und Sperrschieber während des Spülbetriebs.

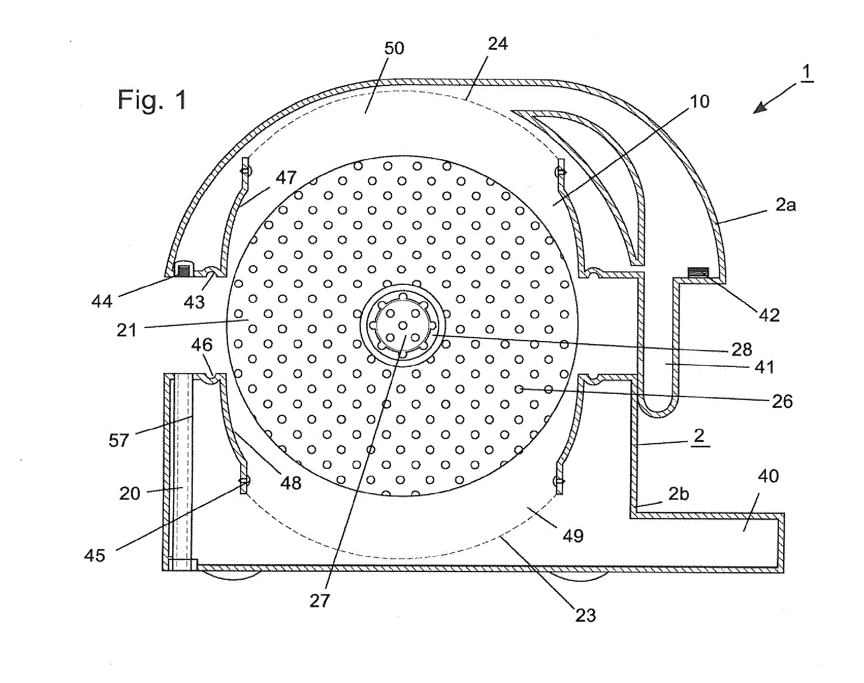

Figur 1 zeigt in einer teilweise geschnittenen Seitenansicht eine Filteranlage 1 mit einem Gehäuse 2, wobei in dieser Ansicht die beiden Gehäuseteile 2a, 2b beabstandet zueinander angeordnet sind. Zwischen den beiden Gehäuseteilen 2a, 2b ist ein Hohlraum 10 ausgebildet, in dem ein Rotationskörper 21 aufgenommen wird. Der Rotationskörper 21, welcher im gezeigten Ausführungsbeispiel eine Kugelform aufweist, ist mit einem Schraubdeckel 27 ausgestattet, der zur Befüllung des Rotationskörpers 21 vorgesehen ist. Der Schraubdeckel 27 kommt in einer Vertiefung 28 zu liegen, sodass der Schraubdeckel 27 die äußere Abmessung der Kugelform nicht überschreitet und somit nicht zu einem Verklemmen oder Verkanten führen kann. Der Rotationskörper 21 ist mit einer Vielzahl von Öffnungen 26 ausgestattet, die über die gesamte Oberfläche des Rotationskörpers 21 verteilt angeordnet sind. Die Öffnungen 26 dienen zum Einund Austritt des zu filternden Wassers im Filterbetrieb oder des einlaufenden Wassers bei einem Spülbetrieb. Das Wasser wird in diesem Fall von unten durch ein erstes Sieb 23 eingespült, durchdringt den Rotationskörper 21 und tritt über ein zweites Sieb 24 aus. Die Zuleitung des Wassers erfolgt über einen unteren Rohrstutzen 40, der im Weiteren zur Aufnahme einer UVC-Lampe 9 vorgesehen ist, sodass zusätzlich die Schwebealgen abgetötet werden können. Der Austritt des Wassers erfolgt über einen weiteren Rohrstutzen 41 zum Teich hin, wie aus den nachfolgenden Figuren deutlich wird. Zusätzlich kann über einen Gewindeanschluss 42 ein Schlauchanschluss mit Sperrventil eingeschraubt werden, um beispielsweise einen Spülbetrieb einzuleiten, wenn das aus dem Teich gepumpte Wasser hierfür nicht ausreichend sein sollte. Die UVC-Lampe 9 dient zur Abtötung der Schwebealgen, wobei das Wasser über die UVC-Lampe 9 hinweggeführt wird, entweder im Filterbetrieb zum Hohlraum 10 bzw. im Spülbetrieb vom Hohlraum 10 zur Schmutzwasserleitung über die Sperrschieber 5, 6.

Das erste Gehäuseteil 2a ist glockenförmig ausgebildet und weist die erste Hälfte eines Hohlraumes 10 auf, sowie einen Rohrstutzen 41 und Gewindeanschluss 42. In einer Nut 43 kommt ein nicht dargestellter Dichtungsring zu liegen, sodass beide Gehäuseteile abdichtend miteinander verbunden werden können, und zwar über mehrere Schraubbolzen 20 und Gewindebohrungen 44 des ersten Gehäuseteils 2a.

Das zweite Gehäuseteil 2b besteht im Wesentlichen aus einem Unterteil mit einem Rohrstutzen 40 und der zweiten Hälfte des Hohlraumes 10, in dem der Rotationskörper 21 zu liegen kommt. Der Hohlraum 10 wird hierbei jeweils durch eine innere Seitenwand der beiden Gehäuseteile 2a, 2b gebildet, die nach oben und unten hin offen sind und jeweils durch ein Sieb 23 bzw. 24 verschlossen werden. Die Siebe 23, 24 werden durch Befestigungsschrauben 45 gehalten. Ebenso wie das erste Gehäuseteil 2a besitzt das zweite Gehäuseteil 2b eine Nut 46, in der der Dichtungsring zu liegen kommt. Zur Verschraubung der beiden Gehäuseteile 2a, 2b sind im unteren Gehäuseteil 2b mehrere Bohrungen 57 vorgesehen, welche um den Hohlraum 10 angeordnet sind.

Der durch die beiden Gehäuseteile 2a, 2b gebildete Hohlraum ist so bemessen, dass der Rotationskörper 21 frei bewegbar ist. Dadurch, dass der Rotationskörper 21 aus einem schwimmfähigen Material besteht, wird dieser aus einer unteren Position beim Einströmen von Wasser nach oben gedrückt und führt somit eine vertikale Bewegung aus, die durch eine Anschlagfläche 47 des ersten Gehäuseteils 2a und eine Anschlagfläche 48 des zweiten Gehäuseteils 2b begrenzt wird. Soweit der Rotationskörper 21 an der unteren Anschlagfläche 48 anliegt, verbleibt ein Freiraum 49 zwischen dem Rotationskörper 21 und dem ersten Sieb 23. Ebenso verbleibt ein Freiraum 50 zwischen dem Rotationskörper 21 und dem zweiten Sieb 24, wenn der Rotationskörper 21 an der oberen Anschlagfläche 47 anliegt. Der untere Freiraum 49, 50 dient zur Einspülung des Wassers und Verteilung im normalen Filterbetrieb über die freiliegende Kugeloberfläche des Rotationskörpers 21. Der obere Freiraum 50 ermöglicht in diesem Fall den Austritt des Wassers aus dem Rotationskörper 21 im Spülbetrieb mit umgekehrter Flussrichtung des Wassers.

Aufgrund der Gewichtskraft liegt der Rotationskörper 21 bei fehlendem Wassereinlauf an der unteren Anschlagfläche 48 an. Durch einströmendes Wasser wird er insoweit angehoben, dass er an der Anschlagfläche 47 des ersten Gehäuseteils 2a zu liegen kommt. Beide Positionen zeichnen sich dadurch aus, dass der Rotationskörper 21 fest an die Anschlagflächen 47, 48 angedrückt wird und somit nicht rotieren kann. Bei einem Spülvorgang wird der Rotationskörper 21 in jedem Fall durch die umgekehrte Flussrichtung des Wassers von der oberen Anschlagfläche 47 zur unteren Anschlagfläche 48 gedrückt, wobei in Höhe der Fügezone beider Gehäuseteile 2a, 2b der Rotationskörper frei rotieren kann. Diese Rotation wird dazu verwendet, um die in dem Rotationskörper 21 aufgenommenen Filtermaterialien durcheinander zu wirbeln, um auf diese Weise den Reinigungseffekt beim Spülvorgang zu verbessern. Bei den Filtermaterialien handelt es sich um einen porösen Schaumstoff, der die Entstehung von Bakterienkulturen fördert. Die Bakterien dienen zum Abbau der Schadstoffe im Wasser und der Rückstände aus dem Fischbesatz. Die sich hierdurch ergebenden Verunreinigungen in dem Filtermaterial können bei einem Spülvorgang ausgewaschen werden.

Das erstmalige Befüllen des Rotationskörpers 21 erfolgt über die Öffnung 26 mit einem Schraubdeckel 27, der auf die Öffnung 26 aufgeschraubt werden kann. Die Öffnung 26 wurde hierbei so groß gewählt, dass die Filtermaterialien 25 ohne Probleme in den Rotationskörper 21 eingelegt werden können und dort lose zu liegen kommen. Nach Befüllung des Rotationskörpers 21 wird der Schraubdeckel 27 aufgeschraubt, wobei dieser in der muldenförmigen Vertiefung 28 zu liegen kommt, sodass der Schraubdeckel 27 nicht gegenüber der Oberfläche des Rotationskörpers 21 hervorsteht. Hierdurch ist beispielsweise gewährleistet, dass eine freie Rotation des Rotationskörpers 21 erfolgen kann.

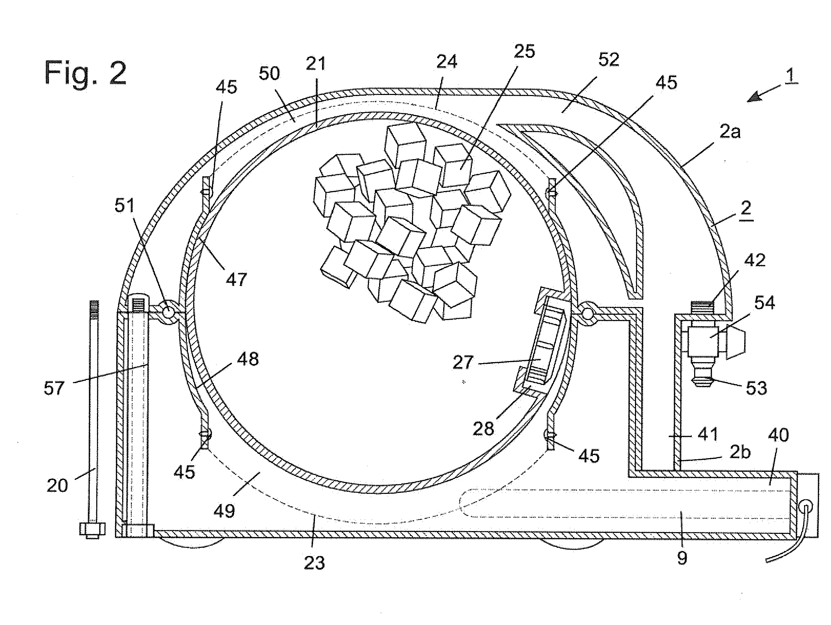

Figur 2 zeigt in einer teilweise geschnittenen Ansicht die Filteranlage 1, wie sie aus der Figur 1 bereits bekannt ist. Die beiden Gehäuseteile 2a, 2b liegen unmittelbar aufeinander und werden durch einen Dichtungsring 51 abgedichtet. Eine Verschraubung erfolgt mithilfe von Schraubbolzen 20, die umfangsverteilt um den Hohlraum 10 angeordnet sind und eine Bohrung 57 des zweiten Gehäuseteils 2b durchgreifen, während sie in das erste Gehäuseteil 2a eingeschraubt werden.

Die Figur 2 zeigt den Filterbetrieb der Filteranlage 1, wenn der Rotationskörper 21 in einer angehobenen Position an der Anschlagfläche 47 anliegt. Zwischen dem Rotationskörper 21 und dem zweiten Sieb 24 befindet sich der Freiraum 50, welcher in dieser angehobenen Position des Rotationskörpers 21 das geringste Volumen aufweist. Der gegenüberliegende Freiraum 49 zwischen Rotationskörper 21 und erstem Sieb 23 besitzt in dieser Position das größte Volumen. Durch die geschnittene Darstellung des Rotationskörpers 21 ist das Filtermaterial 25, im gezeigten Ausführungsbeispiel bestehend aus Würfeln, zu erkennen. Anstelle von Würfeln könnten ebenso Scheiben oder andere geometrische Formen verwendet werden. Wichtig ist, dass das Filtermaterial 25 lose in dem Rotationskörper 21 gelagert wird, sodass bei einer Verdrehung des Rotationskörpers 21 eine Verwirbelung der Filtermaterialien 25 stattfindet. Das eingespülte Wasser, beispielsweise durch eine Pumpe, die das Wasser unmittelbar aus einem Teich fördert, wird über den Rohrstutzen 40 und eine UVC-Lampe 9 zum Freiraum 49 geführt und von diesem durch die vorhandenen Öffnungen 26 des Rotationskörpers 21 in den Rotationskörper 21 eingespült. Aus der Darstellung ist ersichtlich, dass aufgrund der angehobenen Position des Rotationskörpers 21 die Einströmfläche gegenüber der ursprünglichen Öffnungsweite des Siebes vergrößert ist, weil sich ein Spalt zwischen der Anschlagfläche 48 und der Oberfläche des Rotationskörpers 21 ausbildet. Nachdem das Wasser das Filtermaterial 25 und den Rotationskörper 21 durchspült hat, tritt es in den oberen Freiraum 50 aus und wird über das Sieb 24 über einen Verbindungskanal 52 zum ausgangsseitigen Rohrstutzen 41 geleitet.

Aus dieser Ansicht ist im Weiteren der Schraubdeckel 27 des Rotationskörpers 21 ersichtlich, welcher in einer Vertiefung 28 einliegt, sodass der Schraubdeckel 27 die mögliche Drehbewegung des Rotationskörpers 21 nicht behindert. In den vorhandenen Gewindeanschluss 42 ist ein handelsüblicher Schlauchanschluss 53 mit einem Sperrventil 54 eingeschraubt, wobei dieser Schlauchanschluss 59 für die Frischwasserzufuhr dient, wenn eine intensivere Spülung der Filteranlage 1 geplant ist.

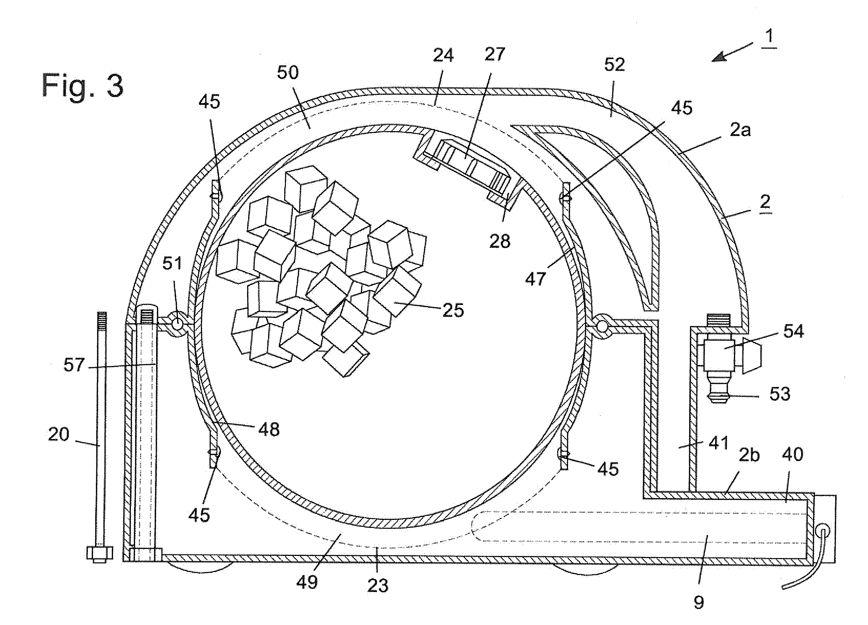

Figur 3 zeigt in einer teilweise geschnittenen Ansicht die Filteranlage 1 gemäß Figur 1 mit dem Rotationskörper 21 in einem Schwebezustand beim Übergang vom Filterbetrieb zum Spülbetrieb mit einer umgekehrten Einspülung des Wassers. In diesem Fall fließt das Wasser von dem ausgangsseitigen Rohrstutzen 41 und dem Verbindungskanal 52 von oben durch das Sieb 24 in den Freiraum 50 und drückt den Rotationskörper 21 nach unten, bis er zur Anlage an der Anschlagfläche 48 zu liegen kommt. Während der Bewegung des Rotationskörpers 21 kann dieser aufgrund der freien Drehbarkeit im mittleren Bereich des Hohlraumes 10 durch das einfließende Wasser in Rotation versetzt werden. Diese Rotation dient dazu, die vorhandenen Filtermaterialien 25 innerhalb des Rotationskörpers 21 durcheinander zu wirbeln und damit eine deutlich erhöhte Reinigungswirkung zu erzielen. Sobald der Rotationskörper 21 die untere Position mit einer Anlage an der Anschlagfläche 48 erreicht hat, wird diese Drehung unterbrochen und das Wasser kann durch den Rotationskörper 21 und das Filtermaterial 25 zunächst in den unteren Freiraum 49 strömen und über das Sieb 23 zum Rohrstutzen 40 gelangen. In diesem Fall wird das Wasser, welches durch Verunreinigungen des Filtermaterials 25 belastet ist, nicht in den Teich zurückgeführt, sondern über eine Rohrleitung, wie sie aus den späteren Figuren ersichtlich ist, abgeleitet. Zusätzlich kann für den Spülvorgang Frischwasser über den haushaltsüblichen Schlauchanschluss 53 nach Öffnen des Sperrventils 54 zugeführt werden. Das Frischwasser soll die Reinigungswirkung unterstützen, beispielsweise wenn die Pumpenleistung der angeschlossenen Teichpumpe nicht ausreichend ist, oder eine stärkere Verschmutzung vorliegt, sodass mithilfe von erhöhtem Druck Frischwasser durch den Rotationskörper 21 und damit durch das Filtermaterial 25 strömen kann. Durch das Frischwasser wird zudem die Rotation des Rotationskörpers 21 unterstützt.

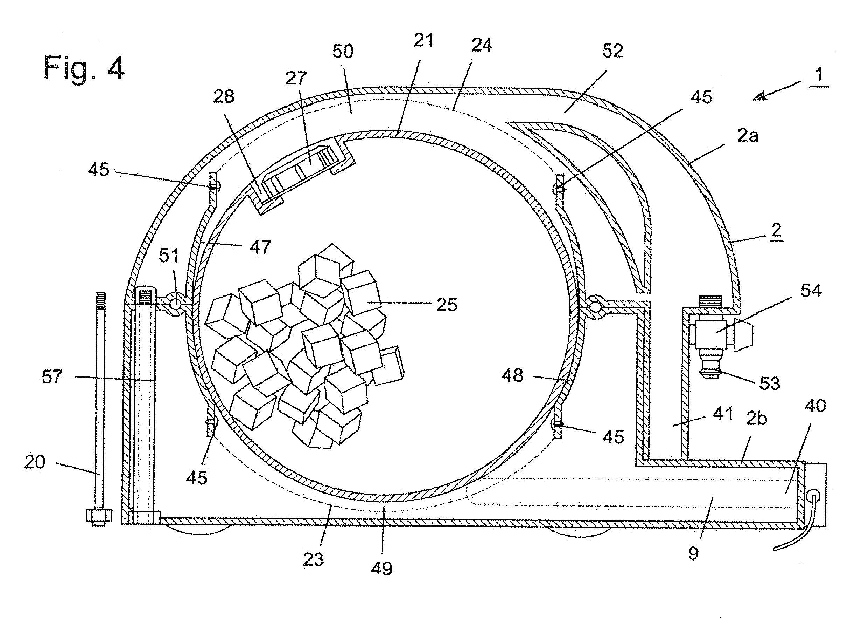

Figur 4 zeigt in einer teilweise geschnittenen Ansicht die Filteranlage 1, und zwar in der Position, in der der Spülbetrieb fortgesetzt wird, mit einer Anlage des Rotationskörpers 21 an der unteren Anschlagfläche 48. Mit der Anlage an die Anschlagfläche 48 endet die Rotation des Rotationskörpers 21, sodass dieser nur noch von dem zufließenden Wasser durchspült wird. Aus der Position des Schraubdeckels 27 wird ersichtlich, wie eine mögliche Verlagerung des Rotationskörpers innerhalb des Freiraums 10 gegenüber der Position aus Figur 2 und 3 erfolgt.

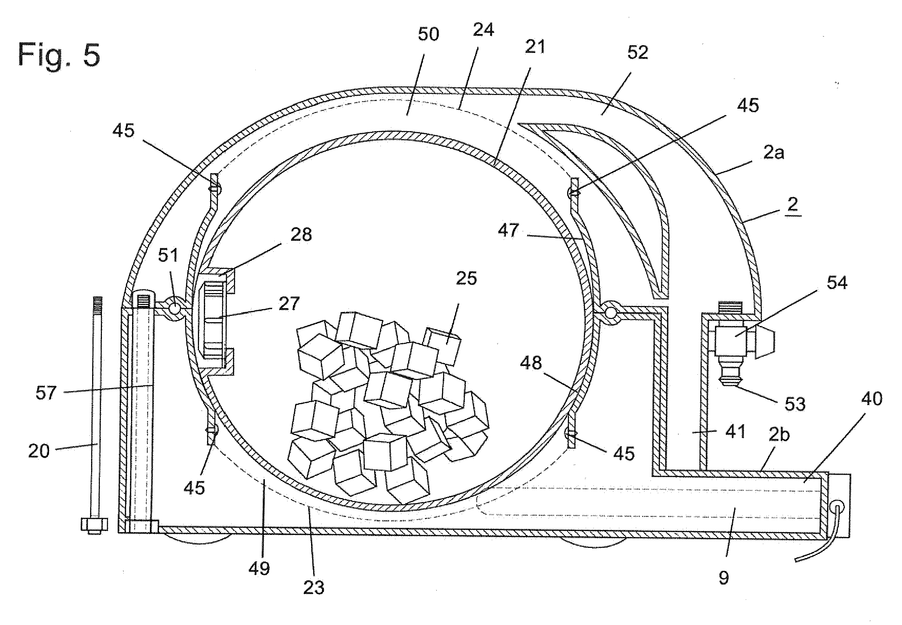

Figur 5 zeigt ebenfalls die Filteranlage 1 während des Spülbetriebes mit einer unteren Position des Rotationskörpers 21. Durch Öffnungen des Sperrventils 54 wurde in diesem Fall zusätzliches Frischwasser eingespült, sodass eine stärkere Rotation des Rotationskörpers 21 gegenüber der Darstellung in Figur 4 vorliegt. Ansonsten erfolgt der Spülvorgang wie zuvor beschrieben.

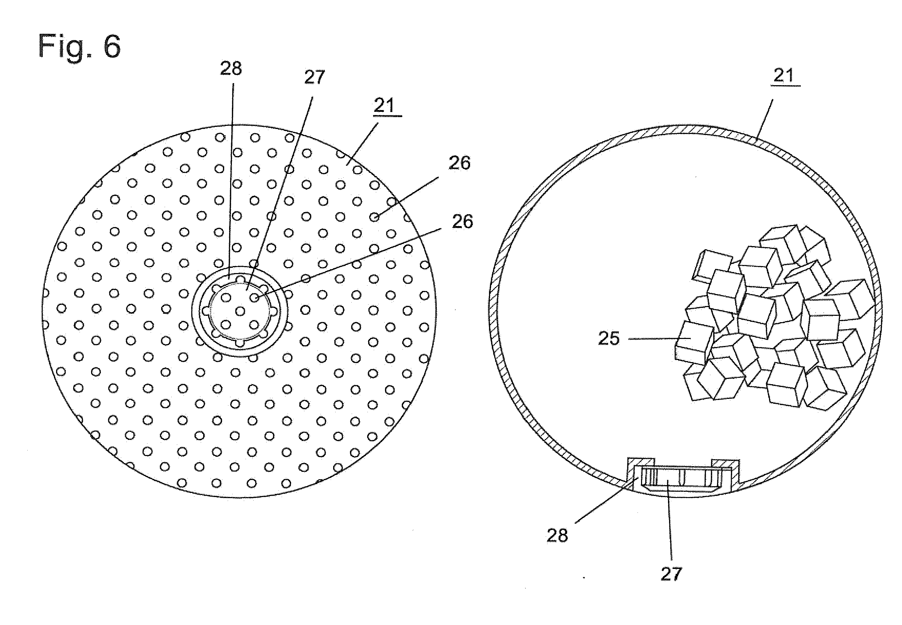

Figur 6 zeigt in einer Seitenansicht und einer geschnittenen Ansicht den Rotationskörper 21. Der Rotationskörper 21 besteht im gezeigten Ausführungsbeispiel aus einer Kugel, die mit Öffnungen 26 auf ihrer Oberfläche versehen ist, sodass das Wasser durch den Rotationskörper 21 strömen kann. Die Befüllung mit Filtermaterial des Rotationskörpers 21 erfolgt über einen Schraubdeckel 27, der in einer Vertiefung 28 zu liegen kommt und damit die Drehbewegung des Rotationskörpers 21 nicht behindert. Auch der Schraubdeckel 27 ist in diesem Fall mit Öffnungen 26 ausgestattet, um den Wasserfluss nicht zu behindern, beispielsweise wenn der Schraubdeckel 27 unmittelbar in der Nähe eines Siebes 23, 24 zu liegen kommt. Aus der geschnittenen Ansicht des Rotationskörpers 21 ist nochmals der Schraubdeckel 27 mit der Vertiefung 28 ersichtlich und den im Rotationskörper 21 gelagerten Filtermaterialien 25. Im gezeigten Ausführungsbeispiel bestehen diese aus Würfeln, aber ebenso könnten andere geometrische Formen, insbesondere Scheiben als Filtermaterial 25 verwendet werden, welche aus porösem Kunststoff bestehen, sodass sich die Mikroben und Bakterien in den Filtermaterialien ansiedeln können, damit eine Aufbereitung des durchfließenden Wassers erfolgen kann. In größeren Zeitabständen ist eine Rückspülung vorgesehen, um nicht abbaubare Bestandteile auszuspülen, wobei in diesem Fall eine umgekehrte Flussrichtung des Wassers zur Spülung eingesetzt wird, die u.a. dazu führt, dass die Filtermaterialien 25 aufgrund einer Drehung des Rotationskörpers 21 durcheinander gewirbelt werden.

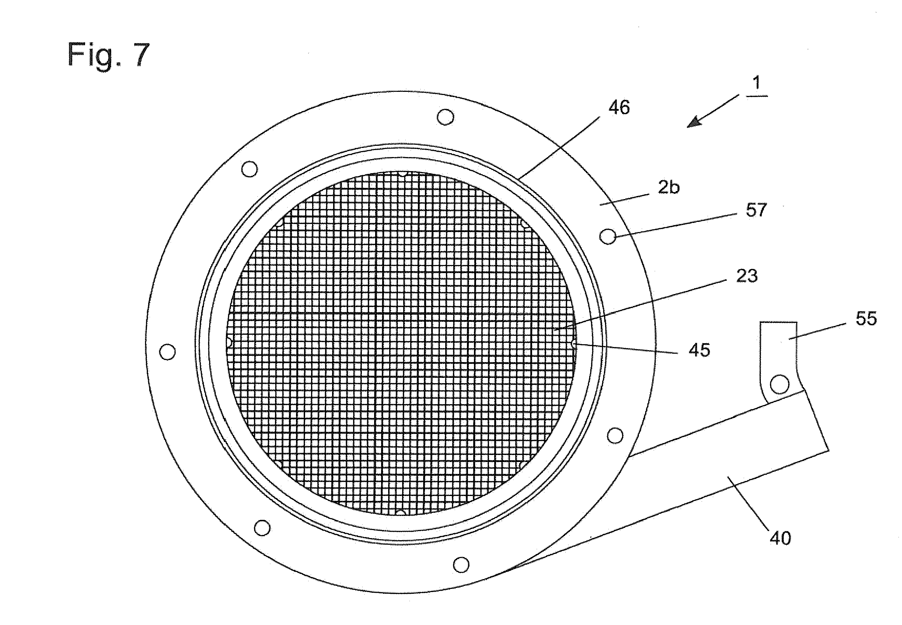

Figur 7 zeigt in einer Draufsicht die Filteranlage 1, und zwar nur das untere Gehäuseteil 2b mit dem unteren Sieb 23. Um das Sieb 23 herum sind in der Gehäusewandung Bohrungen 57 ausgebildet, die zur Aufnahme des Schraubbolzens 20 dienen, um die beiden Gehäuseteile 2a, 2b miteinander zu verschrauben. In einer Nut 46 kommt in diesem Fall der Dichtungsring zu liegen. Das Sieb 23 ist über Befestigungsschrauben 45 mit dem unteren Gehäuseteil 2b verbunden. Ein seitlich angeformter Rohrstutzen 40 dient einerseits zur Aufnahme einer UVC-Lampe 9 und zur Wasserführung über einen weiteren Stutzen 55, welcher zum Anschluss eines Sperrschiebers zur Zuleitung des Teichwassers vorgesehen ist.

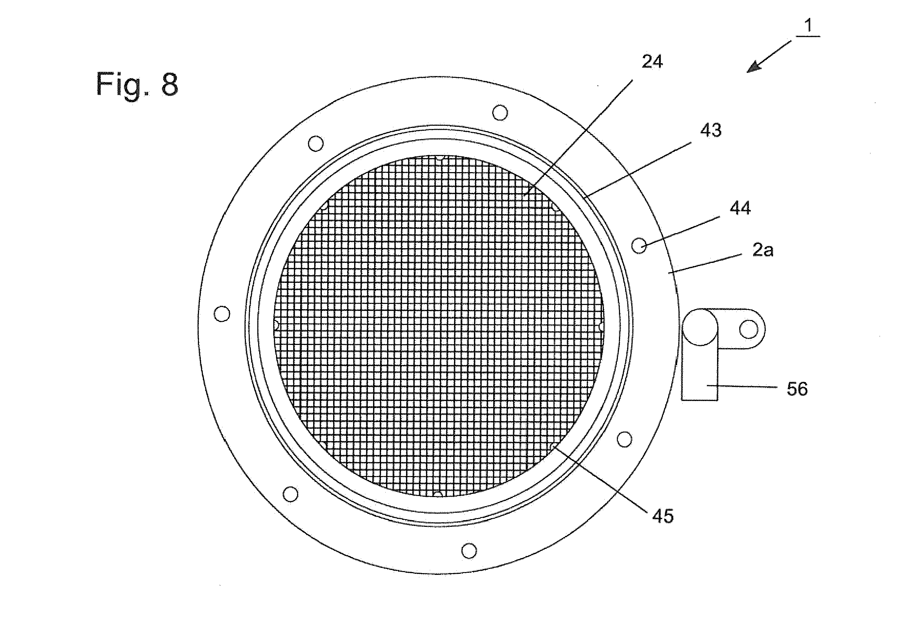

Figur 8 zeigt in einer Unteransicht das obere Gehäuseteil 2a mit Gewindebohrungen 44, in die die Schraubbolzen zur Verbindung der beiden Gehäuseteile eingedreht werden. In einer Nut 43 kommt der Dichtungsring zur Abdichtung der beiden Gehäuseteile 2a, 2b zu liegen. Das obere Sieb 24 ist mit dem Gehäuseteil 2a ebenfalls über Befestigungsschrauben 45 verbunden. Seitlich ist an dem Gehäuseteil 2a ein Rohrstutzen 56 angeformt, welcher die Rückspülung des Wassers zum Teich ermöglicht.

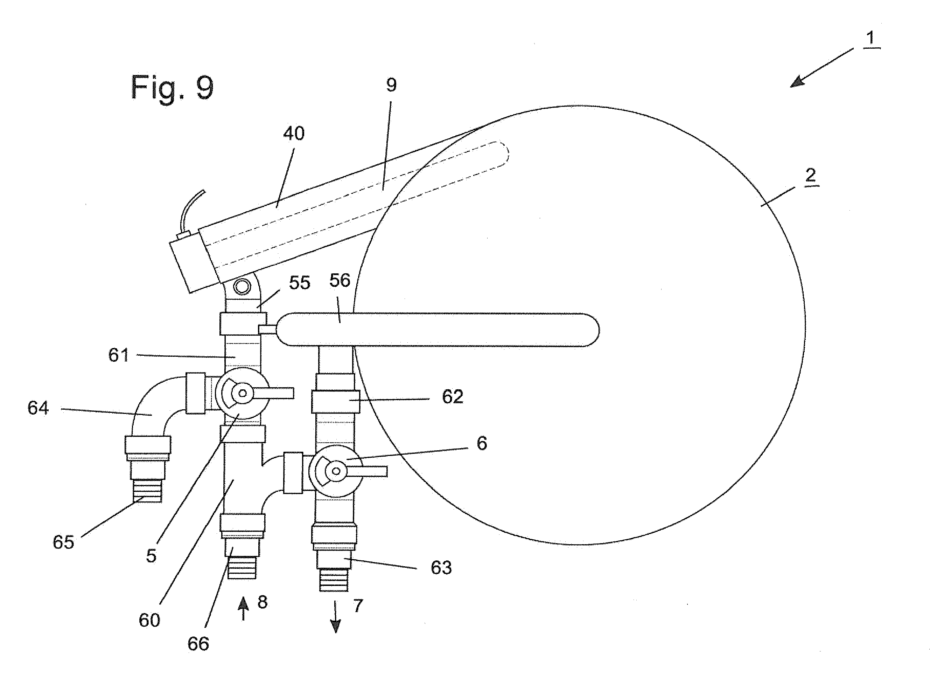

Figur 9 zeigt die Filteranlage 1 in einer Draufsicht mit den notwendigen Zu- und Ableitungen. Über zwei Sperrschieber 5, 6 wird hierbei der Zu- und Ablauf des Wassers geregelt, wobei eine Umschaltung zwischen Filterbetrieb und Spülbetrieb möglich ist. Im Filterbetrieb fließt das durch eine Pumpe zugeführte Wasser aus dem Teich gemäß Pfeil 8 über einen Schlauchanschluss 66 und einen T-Verbinder 60 zum ersten Sperrschieber 5 und über einen Verbindungsstutzen 61 zum Rohrstutzen 55, der mit dem Rohrstutzen 40 verbunden ist. Nachdem das Wasser über den Rohrstutzen 40 in den Hohlraum 10 der Filteranlage gelangt ist, wird sowohl der Rotationskörper 21 als auch die Filtermaterialien durchspült. Über den zweiten Rohrstutzen 56 mit einer Verbindungsmuffe 62 zum zweiten Sperrschieber 6 und über einen Schlauchanschluss 63 fließt das Wasser gemäß Pfeil 7 zum Teich zurück.

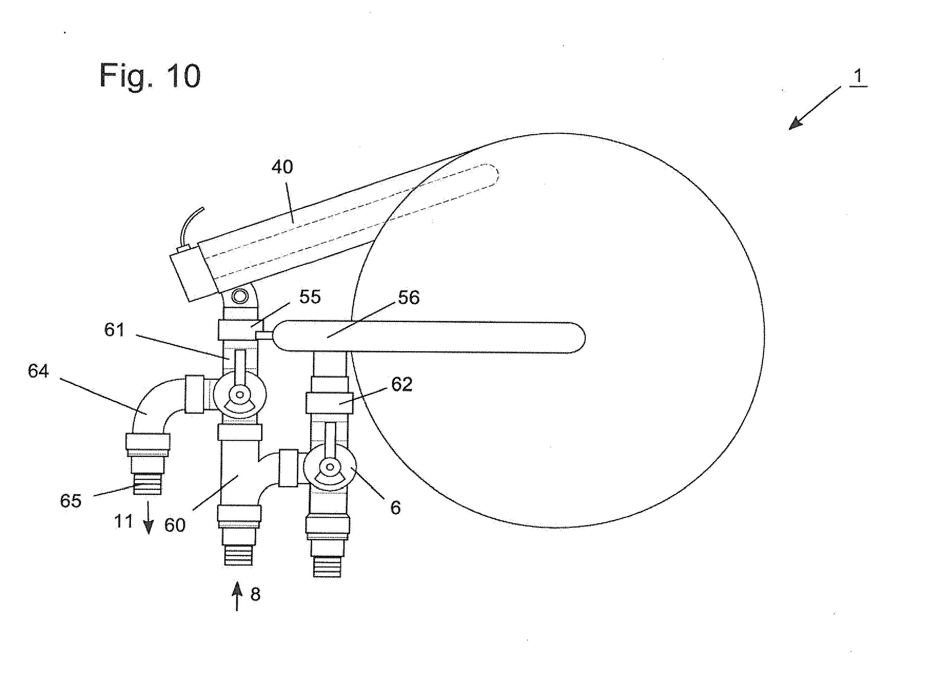

Für einen Spülbetrieb müssen die beiden Sperrschieber 5, 6 um 90 Grad gedreht werden, wie beispielsweise aus Figur 10 ersichtlich. In diesem Fall fließt das vom Teich kommende Wasser gemäß Pfeil 8 über den T-Verbinder 60 zum zweiten Sperrschieber 6 und von diesem unmittelbar über die Verbindungsmuffe 62 zum Rohrstutzen 56 und damit in die Filteranlage 1. Das einströmende Wasser wird aus dem Hohlraum 10 der Filteranlage in den Rohrstutzen 40 gedrückt und über den Verbindungsstutzen 61 zum ersten Sperrschieber 5 und von diesem zu einem Rohrstutzen 64 geleitet, der mit einem Schlauchanschluss 65 ausgestattet ist. In diesem Fall kann der Rohrstutzen 64 zum Ableiten des Wassers gemäß Pfeil 11, d.h. zur Entsorgung benutzt werden. Nachdem der Reinigungsvorgang der Filteranlage 1 beendet wurde, werden beide Sperrschieber 5, 6 in ihre ursprüngliche Position zurückgedreht, sodass der Filterbetrieb wieder aufgenommen werden kann. Zur Kontrolle des Reinigungsfortschrittes kann der Rohrstutzen 64 transparent ausgeführt sein oder die Schlauchverschraubung 65 ist zumindest teilweise transparent, damit die Wasserqualität visuell geprüft werden kann.

Die gesamte Filteranlage 1 kann durch eine Haube verdeckt werden, die beispielsweise die Form eines Steins, insbesondere eines Findlings erhält, sodass eine direkte Platzierung der Filteranlage 1 neben einem Teich möglich ist. Die Haube ist in den vorliegenden Zeichnungen nicht dargestellt.

### Bezugszeichenliste

- 1: Filteranlage
- 2: Gehäuse
- 2a: Gehäuseteil
- 2b: Gehäuseteil
- 5: Sperrschieber
- 6: Sperrschieber
- 7: Pfeil
- 8: Pfeil
- 9: UVC-Lampe
- 10: Hohlraum
- 11: Pfeil
- 20: Schraubbolzen
- 21: Rotationskörper
- 23: Sieb
- 24: Sieb
- 25: Filtermaterial
- 26: Öffnung
- 27: Schraubdeckel
- 28: Vertiefung
- 40: Rohrstutzen
- 41: Rohrstutzen
- 42: Gewindeanschluss
- 43: Nut
- 44: Gewindebohrung
- 45: Befestigungsschraube
- 46: Nut
- 47: Anschlagfläche
- 48: Anschlagfläche
- 49: Freiraum
- 50: Freiraum
- 51: Dichtungsring
- 52: Verbindungskanal
- 53: Schlauchanschluss
- 54: Sperrventil
- 55: Stutzen
- 56: Rohrstutzen
- 57: Bohrung
- 60: T-Verbinder
- 61: Verbindungsstutzen
- 62: Verbindungsmuffe
- 63: Schlauchanschluss
- 64: Rohrstutzen
- 65: Schlauchanschluss
- 66: Schlauchanschluss

## Patentansprüche

1. Filteranlage (1) zur Reinigung von Wasser aus einem Teich, insbesondere Gartenteich oder Schwimmteich, umfassend zumindest ein Gehäuse (2) mit wenigstens einem Zu- und Ablaufanschluss und zumindest einer Filtereinheit,
**dadurch gekennzeichnet,**
**dass** das Gehäuse (2) wenigstens einen Hohlraum (10) aufweist, in dem ein flüssigkeitsdurchlässiger Rotationskörper (21) mit Filtermaterial (25) gelagert ist, wobei der Hohlraum (10) zumindest eine Einlauf- und eine Auslauföffnung aufweist.

2. Filteranlage (1) nach Anspruch 1,
**dadurch gekennzeichnet,**
**dass** der Hohlraum (10) zwei abgerundete Endbereiche aufweist, welche geringfügig größer als der Durchmesser des Rotationskörpers (21) ausgebildet sind und einen mittleren gestreckten Bereich aufweist

3. Filteranlage (1) nach Anspruch 1 oder 2,
**dadurch gekennzeichnet,**
**dass** der Rotationskörper (21) im mittleren gestreckten Bereich frei drehbar ist.

4. Filteranlage (1) nach einem der Ansprüche 1, 2 oder 3,
**dadurch gekennzeichnet,**
**dass** im Filterbetrieb das über eine Pumpe zugeführte Wasser aus dem Teich von der Einlauföffnung zur Auslauföffnung strömt und im Spülbetrieb in umgekehrter Richtung, wobei die Strömungsrichtung durch zwei Sperrschieber (5, 6) einstellbar ist.

5. Filteranlage (1) nach einem der Ansprüche 1 bis 4,
**dadurch gekennzeichnet,**
**dass** der Hohlraum (10) durch eine innere einstückig angeformte Schale des Gehäuses (2) ausgebildet ist, und/oder dass der Hohlraum (10) im unteren Bereich die Einlauföffnung und im oberen Bereich die Auslauföffnung aufweist.

6. Filteranlage (1) nach einem der Ansprüche 1 bis 5,
**dadurch gekennzeichnet,**
**dass** die Einlauf- und die Auslauföffnung aus jeweils einem Durchbruch der Endbereiche des Hohlraumes (10) besteht, welche durch ein Sieb (23, 24) abgedeckt sind, und/oder dass sich der Durchbruch und das Sieb (23, 24) jeweils über einen Winkelbereich von 80 bis 100 Grad bei einer Kugelform erstrecken.

7. Filteranlage (1) nach einem der Ansprüche 1 bis 6,
**dadurch gekennzeichnet,**
**dass** die Außenfläche des Rotationskörpers (21) nahezu vollständig durch Öffnungen (26) perforiert ist, und/oder dass der Rotationskörper (21) eine durch einen Schraubdeckel (27) verschließbare Öffnung (26) zum Befüllen mit Filtermaterial (25) aufweist, welche oberflächenbündig gestaltet in einer Vertiefung (28) angeordnet ist.

8. Filteranlage (1) nach einem der Ansprüche 1 bis 7,
**dadurch gekennzeichnet,**
**dass** der Rotationskörper (21) aus einer Kugel oder einem Zylinder besteht.

9. Filteranlage (1) nach einem der Ansprüche 1 bis 8,
**dadurch gekennzeichnet,**
**dass** der Rotationskörper (21) mit einem Filtermaterial (25) aus Schaumstoff in Form von Würfeln, Vierecken oder Scheiben befüllt ist, und/oder dass der Rotationskörper (21) zusätzlich mit schwimmfähigen Materialien, wie PE-Kunststoffelementen zumindest teilweise befüllt ist, und/oder dass der Rotationskörper (21) aus einem schwimmfähigen Material, wie beispielsweise PE, hergestellt ist und somit durch einströmende Flüssigkeiten vertikal aufschwimmt.

10. Filteranlage (1) nach einem der Ansprüche 1 bis 9,
**dadurch gekennzeichnet,**
**dass** die Zuführung des Wassers über zwei Sperrschieber (5, 6) steuerbar ist, wobei in einer ersten Betriebstellung im Filterbetrieb das Wasser über den Zulaufanschluss und einen ersten Sperrschieber (5) zu einer UVC-Lampe (9) geführt und von dieser in den Hohlraum (10) von unten einströmt, und wobei über einen zweiten Sperrschieber (6) das aus dem Hohlraum (10) oben austretende Wasser über einen Ablaufanschluss in den Teich zurückführbar ist.

11. Filteranlage (1) nach einem der Ansprüche 1 bis 10,
**dadurch gekennzeichnet,**
**dass** in einer zweiten Betriebstellung durch die Sperrschieber (5, 6) ein Spülbetrieb der Filteranlage (1) erfolgt, bei der das Wasser unmittelbar in den Ablaufanschluss gelangt und durch den Hohlraum (10) und den Rotationskörper (21) aufgrund des vorherrschenden Druckes aus dem Zulaufanschluss austritt und über die UVC-Lampe (9) und den ersten Sperrschieber (5) in einen Schmutzwasserausgang ableitbar ist.

12. Filteranlage (1) nach einem der Ansprüche 1 bis 11,
**dadurch gekennzeichnet,**
**dass** zur Spülung der Filteranlage (1) zusätzlich ein Frischwasserzulauf mit einem Sperrventil (54) vorgesehen ist, welches das Frischwasser unmittelbar dem Hohlraum (10) im oberen Bereich zuführt und aufgrund des vorherrschenden Druckes durch den Hohlraum (10) und den Rotationskörper (21) durch den Zulaufanschluss und über die UVC-Lampe (9) und den ersten Sperrschieber (5) in einen Schmutzwasserausgang ableitbar ist.

13. Filteranlage (1) nach einem der Ansprüche 1 bis 12,
**dadurch gekennzeichnet,**
**dass** das Gehäuse (2) aus zwei Gehäuseteilen (2a, 2b) besteht, welche eine horizontale Unterteilung aufweisen, und/oder dass das Gehäuse (2) und die Anschlussleitungen durch eine aus einem Stein nachempfundene Haube abdeckbar sind.
